# EUROPEAN PATENT SPECIFICATION

(11) **EP 2 985 090 B1**
(45) Date of publication and mention of the grant of the patent: **28.06.2017**
(21) Application number: 13882002.2
(22) Date of filing: 08.04.2013
(51) Int. Cl.: B21D 31/00, B21D 53/14, F16G 5/16, F16G 1/20

(54) **CVT BELT MANUFACTURING METHOD**
HERSTELLUNGSVERFAHREN FÜR EINEN RIEMEN EINES STUFENLOSEN GETRIEBES
PROCÉDÉ DE FABRICATION DE COURROIE DE TRANSMISSION À VARIATION CONTINUE

(43) Date of publication of application: 17.02.2016
(73) Proprietor: TOYOTA JIDOSHA KABUSHIKI KAISHA, Toyota-shi, Aichi-ken, 471-8571 (JP)
(72) Inventor: SHIMIZU Masatake, Toyota-shi Aichi 471-8571 (JP); TAKASHIMA Akira, Toyota-shi Aichi 471-8571 (JP)
(74) Representative: TBK
(86) International application number: PCT/JP2013/060637
(87) International publication number: WO 2014/167632

(56) References cited:
- JP-A- 2004 017 071
- JP-A- 2004 017 110
- JP-A- 2004 243 358
- JP-A- 2004 243 358
- JP-A- 2007 290 014
- JP-A- 2011 136 368

## Description

### TECHNICAL FIELD

The invention relates to an art of processing a CVT belt to a predetermined length by subjecting the CVT belt to a stretching process in consideration of spring-back, in a method of manufacturing the CVT belt.

### BACKGROUND ART

There are roughly two types of transmissions, namely, a manual transmission and an automatic transmission as devices for taking out an output from an engine in accordance with a running state of a vehicle. The automatic transmission may adopt a system that is referred to as a continuously variable transmission in which the speed ratio can be steplessly controlled to the output side of the engine. In recent years, the number of vehicles adopting this continuously variable transmission has been increasing due to technological innovation. The continuously variable transmission is provided with an input shaft and an output shaft that are arranged parallel to each other, and an input pulley and an output pulley that are separately attached to the input shaft and the output shaft respectively, as is referred to as a belt-type continuously variable transmission. Each of this input pulley and this output pulley is configured as a combination of a fixed sheave and a movable sheave. A V-shaped groove is formed between the fixed sheave and the movable sheave.

A laminated hoop that is hung on the input pulley and the output pulley is configured as a laminated hoop consisting of a multitude of belt elements and an annular metal body. Each of the belt elements is formed substantially in the shape of a trapezoid, and is arranged such that legs of the trapezoid are in contact with the fixed sheave and the movable sheave respectively. Then, the laminated hoop is configured to be arranged between a neck portion extended from an upper base side of the trapezoid and the upper base.

In Patent Document 1, there is disclosed an art regarding a device and a method of adjusting the circumferential length of an endless metal ring. The endless metal ring (an endless metal belt) is hung on a plurality of rollers. While the plurality of the rollers are rotated, the endless metal ring is extensively stretched to be plastically deformed. In this manner, the device of adjusting the circumferential length of the endless metal ring adjusts the circumferential length of the endless metal ring to a target circumferential length. This device includes circumferential length measuring means for measuring the circumferential length of the endless metal ring whose circumferential length has not been adjusted yet. Besides, the device includes adjusting means for adjusting the circumferential length of the endless metal ring to the target circumferential length by enlarging the clearances among the rollers such that the circumferential length of the endless metal ring at the time of adjustment of the circumferential length becomes longer than the target circumferential length by a contraction amount resulting from elastic deformation of the endless metal ring whose circumferential length has been adjusted, based on the measured circumferential length. As a result, the endless metal ring having a predetermined length can be obtained.

In Patent Document 2, there is disclosed an art regarding a device and a method of manufacturing a metal ring. The method of manufacturing the metal ring includes a rolling step, a process circumferential length calculating step, and a stretching step. In the rolling step, the metal ring is rolled until the board thickness of the metal ring (an endless metal belt) becomes equal to a target board thickness. In the process circumferential length calculating step, a process circumferential length of the metal ring that is needed to plastically deform the metal ring from a measured circumferential length to a target circumferential length is calculated based on a correlation between a ductility factor of the metal ring and a stretch ratio of the metal ring. In the stretching step, the metal ring is stretched to the process circumferential length. By this manufacturing method, the dispersion of the circumferential length of the processed metal ring is reduced.

### Related Technical Documents

### Patent Documents

Patent Document 1: Japanese Patent Application Publication No. 2004-243358 (JP 2004-243358 A)
Patent Document 2: Japanese Patent Application Publication No. 2007-290014 (JP 2007-290014 A)

### SUMMARY OF THE INVENTION

### Problem to Be Solved by the Invention

However, when the CVT belt is assembled through the use of the art disclosed in Patent Document 1 or Patent Document 2, the following problem is considered to arise.

The method of manufacturing the CVT belt disclosed in each of Patent Document 1 and Patent Document 2 is a single process. For this reason, the endless metal belt used for a CVT belt having a desired length may not be obtained due to the creation of spring-back after the process. A plurality of layers of endless metal belts used for the CVT belt are laminated on one another to be assembled with the CVT belt. Thus, each of the endless metal belts that is arranged on an outer peripheral side needs to be formed longer than a corresponding one of the endless metal belts that is arranged on an inner peripheral side thereof, by a thickness of the endless metal belt that is arranged on the inner peripheral side. If the circumferential lengths of these endless metal belts on the inner peripheral side and the outer peripheral side are inappropriate so that there is a gap created therebetween or that the endless metal belts are too tightly laminated on each other, an influence may be exerted not only on the assemblage but also on the life of the CVT belt. Consequently, each of the endless metal belts is desired to have a circumferential length that is as close as possible to a target circumferential length.

Then, despite the fact that each of the endless metal belts is manufactured even in consideration of the internal stress thereof, the endless metal belts are inevitably different in board thickness, board width and material component from one another, although the differences are slight. As a result, it has been empirically known that the spring-back amounts are also different from one another. Therefore, it has been confirmed through an experiment conducted by the applicant that each actual product does not turn out to have a desired length even when it is processed to the desired length while making a prediction through the use of a spring-back ratio measured in advance as disclosed in Patent Document 1 and Patent Document 2.

Thus, in order to solve this problem, it is an object of the invention to provide a method of manufacturing a CVT belt that makes it possible to restrain the length of an endless metal belt from dispersing.

### Means for Solving the Problem

In order to solve the foregoing object, a method of manufacturing a CVT belt according to one aspect of the invention has the following features.
(1) In the method of manufacturing the CVT belt, an endless metal belt is retained from inside by a plurality of rollers, and is processed into a predetermined circumferential length by widening gaps among the rollers. This method of manufacturing the CVT belt has a first-stage stretching step, a spring-back measuring step, a calculating step, and a second-stage stretching step. In the first-stage stretching step, the endless metal belt is stretched to extend a circumferential length thereof by widening distances among the rollers. In the spring-back measuring step, a spring-back amount of the endless metal belt in the first-stage stretching step is measured. In the calculating step, a predicted spring-back amount that is predicted to result in the second-stage stretching step is calculated from the measured spring-back amount. In the second-stage stretching step, the endless metal belt is stretched and processed into the predetermined circumferential length by further widening the distances among the rollers based on the predicted spring-back amount.
   In accordance with the aforementioned aspect (1), the spring-back amount of the endless metal belt is measured from a result of the first-stage stretching step, the predicted spring-back amount is calculated from the measured value, and the endless metal belt is formed by the second-stage stretching step. That is, the spring-back amount of the endless metal belt itself that is to be processed is measured, and the endless metal belt is processed into the predetermined length based on this measured spring-back amount by the second-stage stretching step. Therefore, even when the material, the board thickness, or the board width differs, the dispersion of the circumferential length of the endless metal belt can be minimized.
(2) In the method of manufacturing the CVT belt described in (1), it is preferable that a material length measuring step of measuring a material circumferential length before stretching the endless metal belt prior to the first-stage stretching step be provided, and that the endless metal belt be stretched to be processed such that a first-stage stretch length of a stretching process to which the endless metal belt is subjected becomes approximately 90 percent of a target process circumferential length that is obtained by subtracting the material circumferential length from a target circumferential length of the endless metal belt, in the first-stage stretching step.
   In accordance with the aforementioned aspect (2), the stretching process is carried out such that the first-stage stretch length of the endless metal belt in the first-stage stretching step, namely, the length by which the endless metal belt is extended in the first-stage stretching step becomes approximately 90% of the target process circumferential length that is obtained by subtracting the material circumferential length from the target circumferential length. This contributes toward reducing the dispersion of the circumferential length of the processed endless metal belt. As a result, it is possible to contribute toward prolonging the life of the CVT belt.
(3) In the method of manufacturing the CVT belt described in (1) or (2), it is preferable that the plurality of the rollers include at least a first roller and a second roller, that the second roller have moving means moving toward and away from the first roller, and urging means for urging the second roller in a moving direction thereof, and that the spring-back amount of the endless metal belt be measured with a certain load applied to the second roller by the urging means, in the spring-back measuring step.

In accordance with the aforementioned aspect (3), a certain load is applied to the second roller by the urging means in measuring the spring-back amount of the endless metal belt, so the endless metal belt is stretched on the first roller and the second roller without slackening. Therefore, the spring-back amount can be accurately measured. This makes it possible to contribute toward reducing the dispersion of the circumferential length of the processed endless metal belt. As a result, it is possible to contribute toward prolonging the life of the CVT belt.

### BRIEF DESCRIPTION OF THE DRAWINGS

[FIG. 1] FIG. 1 is an illustrative view of an endless metal belt length adjusting mechanism according to an embodiment of the invention.
[FIG. 2] FIG. 2 is a time chart regarding an operation cycle of an adjusting device according to the present embodiment of the invention.
[FIG. 3] FIG. 3 is a flowchart regarding the processing of a material ring according to the present embodiment of the invention.
[FIG. 4] FIG. 4 shows a correlation diagram regarding a spring-back amount according to the present embodiment of the invention.
[FIG. 5] FIG. 5 is a perspective view of a CVT belt according to the present embodiment of the invention.
[FIG. 6] FIG. 6 is an exploded perspective view of the CVT belt according to the present embodiment of the invention.
[FIG. 7] FIG. 7 is a graph prepared for comparison, with a first-stage stretch ratio being 90%.
[FIG. 8] FIG. 8 is a graph prepared for comparison, with the first-stage stretch ratio being 60%.
[FIG. 9] FIG. 9 is a graph prepared for comparison, with the first-stage stretch ratio being 40%.

### MODE FOR CARRYING OUT THE INVENTION

First of all, the embodiment of the invention will be described using the drawings serving as a reference. Incidentally, the details of the drawings used herein are simplified for the convenience of illustration.

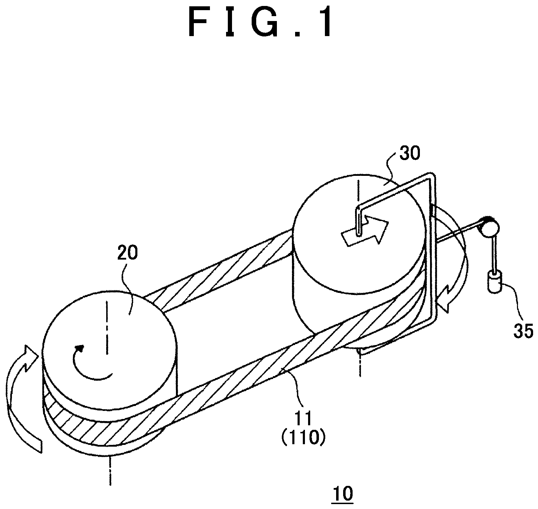

FIG. 1 shows an illustrative view of an endless metal belt length adjusting mechanism according to the present embodiment of the invention. FIG. 1 is intended only to illustrate the concept of an adjusting device 10. Therefore, this drawing is simplified. The adjusting device 10 includes two rollers, namely, a driving roller 20 and a driven roller 30. A material ring 11 is hung on the driving roller 20 and the driven roller 30. The material ring 11 means an endless metal belt 110 whose circumferential length has not been adjusted yet. The driving roller 20 includes a rotational driving mechanism (not shown), and is configured to rotate with a predetermined torque. The driven roller 30 is configured to rotate following the driving roller 20, with the material ring 11 hung on the driving roller 20 and the driven roller 30. Besides, the driven roller 30 includes a moving mechanism (not shown) that is designed to move toward and away from the driving roller 20.

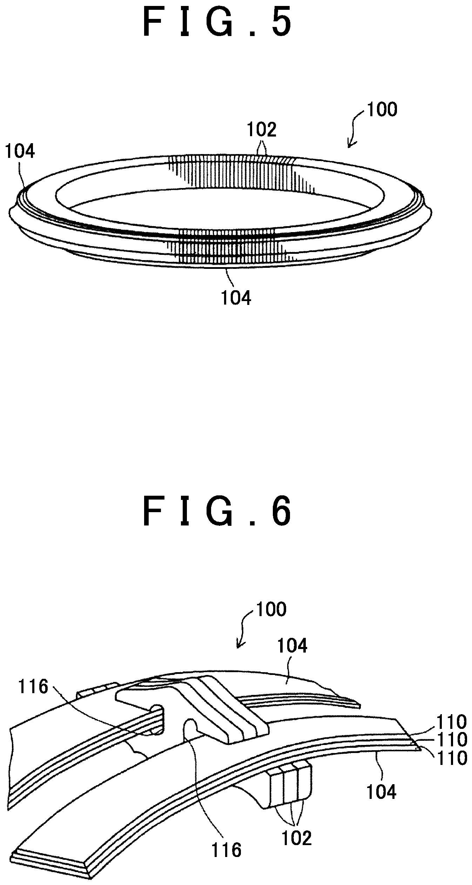

Besides, an inter-roller distance between the driving roller 20 and the driven roller 30 is measured by a sensor 50 (not shown). A magnetic measuring instrument is employed as this sensor 50. However, other types of sensors may also be employed as long as the inter-roller distance between the driving roller 20 and the driven roller 30 can be accurately measured. By measuring the inter-roller distance between the driving roller 20 and the driven roller 30, a length of the material ring 11 is calculated from a diameter of the driving roller 20 and a diameter of the driven roller 30. As shown in FIG. 6, which will be described later, endless metal belts 110 whose circumferential lengths are different from one another (material rings 11 whose circumferential lengths have been adjusted) are formed in a superimposed manner on laminated hoops 104. The circumferential lengths of the endless metal belts 110 are so set as to increase by a thickness of the endless metal belts 110 in the sequence in which the endless metal belts 110 are superimposed on one another in an outward direction. In the present embodiment of the invention, each of the laminated hoops 104 is formed by superimposing a plurality of layers of the endless metal belts 110 on one another.

Although not shown in the drawing, the driving roller 20 and the driven roller 30 are crowned. By rotating the driving roller 20, the material rings 11 also rotate accordingly along an elliptical trajectory. The material rings 11 are designed not to lose synchronism due to crowning. Then, the driven roller 30 moves away from the driving roller 20, so the material rings 11 are extended to predetermined circumferential lengths respectively. After the material rings 11 are processed into the endless metal belts 110 of predetermined lengths, the plurality of the endless metal belts 110 are laminated on one another to be assembled as the CVT belt 100.

Besides, the driven roller 30 is fitted with a weight 35 that serves as urging means for urging the driven roller 30 in a moving direction thereof. The driven roller 30 is structured such that a predetermined load is always applied, in the moving direction of the driven roller 30, to each of the material rings 11 that are hung on the driving roller 20 and the driven roller 30. That is, the driven roller 30 is structured to be moved by a moving mechanism (not shown) that is provided separately, while being always pulled by the weight 35.

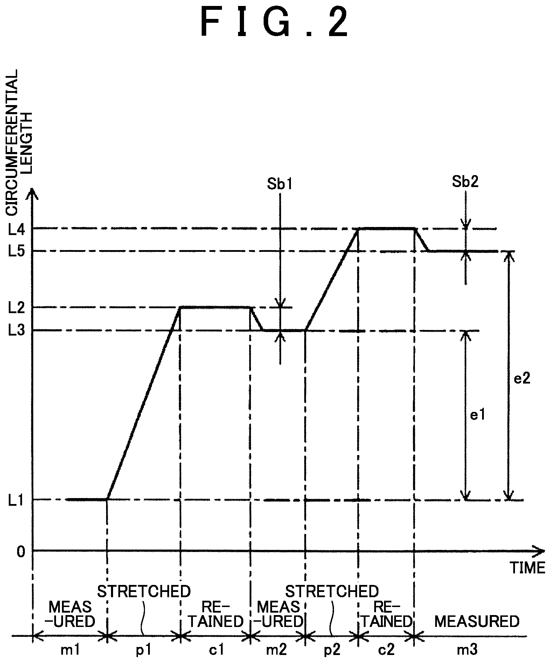

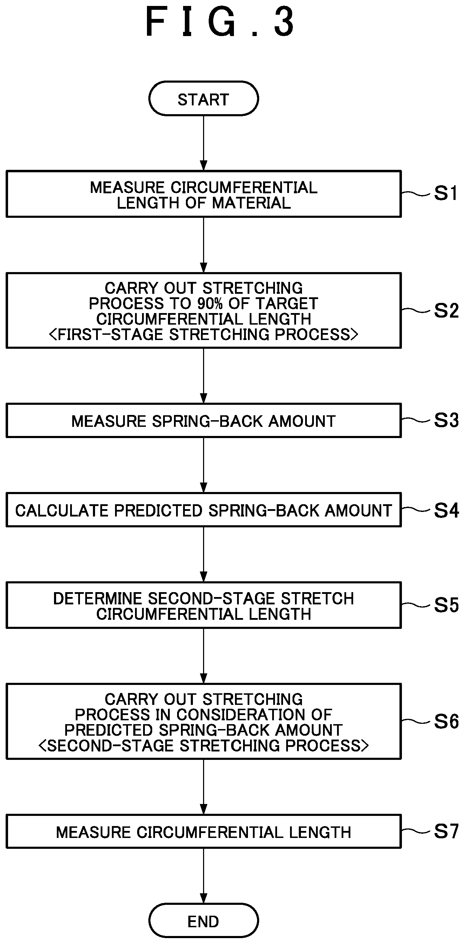

FIG. 2 shows a time chart regarding an operation cycle of the adjusting device 10. FIG. 3 shows a flowchart regarding the processing of each of the material rings 11. The time chart shown in FIG. 2 is expressed as a graph with the axis of ordinate representing circumferential length and with the axis of abscissa representing time. The operation of the adjusting device 10 will be described using FIGS. 2 and 3.

First of all in S1, a material circumferential length of the material ring 11 is confirmed. In circumferential length measurement m1, a material circumferential length L1 is calculated based on data of the sensor 50 (not shown). Then, a stretching process of the material ring 11 is carried out in a first-stage stretching step p1 in S2. In the first-stage stretching step p1, the material ring 11 is stretched to a first-stage stretch circumferential length L2. The first-stage stretch circumferential length L2 is set such that a distance of the stretching process, namely, a moving distance of the driven roller 30 becomes 90 percent of a target circumferential length L5 from a result measured through circumferential length measurement m1.

After having moved by the first-stage stretch circumferential length L2, the driven roller 30 is retained for a predetermined time while a certain force is applied to the driven roller 30 by the moving mechanism thereof in a traveling direction thereof, in a first retaining step c1. By nulling the driving force of the driven roller 30 afterward, spring-back occurs in the material ring 11, and the driven roller 30 moves toward the driving roller 20 side. In this case, the weight 35 is connected to the driven roller 30. Therefore, the driven roller 30 stops with a certain tensile force held applied to the material ring 11, and the circumferential length of the material ring 11 shortens by a spring-back amount Sb1 and becomes equal to a first-stage post-stretch circumferential length L3.

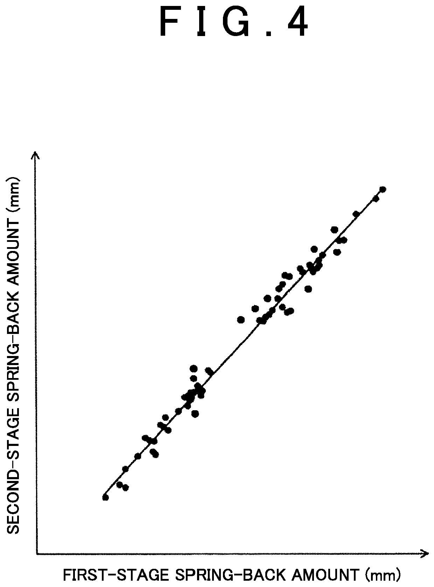

In S3, a measuring step m3 is carried out to measure the spring-back amount Sb1 resulting from the first-stage stretching process. As described previously, the circumferential length of the material ring 11 is calculated from the distance between the driving roller 20 and the driven roller 30. Then in S4, a predicted spring-back amount Sb2 that results when a second-stage stretching process is carried out is calculated referring to the measured spring-back amount Sb1. The predicted spring-back amount Sb2 is calculated based on a correlating equation that is obtained in advance. FIG. 4 shows a correlation diagram regarding the spring-back amount Sb1. The axis of ordinate represents the second-stage spring-back amount, and the axis of abscissa represents the first-stage spring-back amount. The material ring 11 is stretched in advance to carry out an actual measurement. A result of this actual measurement is plotted, and the correlating equation using a determination coefficient is obtained. The predicted spring-back amount Sb2 is calculated with the aid of this spring-back amount correlating equation that is obtained in advance.

In S5, a second-stage stretch circumferential length L4 is determined. The second-stage stretch circumferential length L4 is determined from the predicted spring-back amount Sb2 thus calculated. Then in S6, the material ring 11 is stretched for the second time in a second-stage stretching step p2. In the second-stage stretching step p2, the driven roller 30 is moved based on the second-stage stretch circumferential length L4 determined in S5. When the driven roller 30 is moved to a position corresponding to the second-stage stretch circumferential length L4, the moving mechanism of the driven roller 30 retains the driven roller 30 for a predetermined time while applying a certain force to the driven roller 30 in the traveling direction thereof, in a second retaining step c2. By nulling the driving force of the driven roller 30 afterward, the driven roller 30 is returned toward the driving roller 20 side by the predicted spring-back amount Sb2. Finally in S7, the circumferential length of the material ring 11 is measured.

In this manner, the processing of the material ring 11 is ended. FIG. 5 shows a perspective view of the CVT belt 100. FIG. 6 shows an exploded perspective view of the CVT belt 100. The CVT belt 100 is constituted of the laminated hoops 104 that are formed by superimposing elements 102 and the plurality of the endless metal belts 110 on one another. The CVT belt 100 is completed by inserting the annular laminated hoops 104 into constriction portions 116 that are provided in the elements 102 at two locations respectively. In this manner, after each of the material rings 11 is processed into a corresponding one of the endless metal belts 110 having a predetermined length, the plurality of the endless metal belts 110 are superimposed on one another to form the laminated hoops 104. The CVT belt 100 is formed by assembling the laminated hoops 104 with the elements 102.

The CVT belt 100 is manufactured with the aforementioned configuration according to the present embodiment of the invention. Therefore, the operation and effect as will be described hereinafter are achieved.

First of all, as the effect of the present embodiment of the invention, it is possible to mention that the length of each of the endless metal belts 110 can be restrained from dispersing. In the method of manufacturing the CVT belt 100 according to the first embodiment of the invention, each of the endless metal belts 110 is retained from inside by the plurality of the rollers (the driving roller 20 and the driven roller 30), and the endless metal belt 110 is processed into a predetermined circumferential length by widening a gap between the driving roller 20 and the driven roller 30. This manufacturing method has the first-stage stretching step, the spring-back measuring step, the calculating step, and the second-stage stretching step p2. In the first-stage stretching step, the endless metal belt 110 is stretched to extend the circumferential length thereof by widening the distance between the driving roller 20 and the driven roller 30. In the spring-back measuring step, the spring-back amount Sb1 of the endless metal belt 110 in the first-stage stretching step p1 is measured. In the calculating step, the predicted spring-back amount Sb2 that is predicted to result in a subsequent step is calculated from the measured spring-back amount Sb1. In the second-stage stretching step p2, the endless metal belt 110 is stretched to be processed into the predetermined circumferential length by further widening the distance between the driving roller 20 and the driven roller 30 based on the predicted spring-back amount Sb2.

The process is carried out in two stages, that is, the first-stage stretching step p1 and the second-stage stretching step p2. After the material ring 11 is stretched from the material circumferential length L1 to the first-stage stretch circumferential length L2 in the first-stage stretching step p1, it is measured through spring-back amount measurement m2 that the material ring 11 has reached the first-stage post-stretch circumferential length L3 due to spring-back. Using the value of the spring-back amount Sb1 obtained herein, the predicted spring-back amount Sb2 is predicted, and the second-stage stretch circumferential length L4 is determined. Then, the material ring 11 eventually reaches the target circumferential length L5. By thus acquiring the spring-back amount Sb1 in the first-stage stretching step p1 and calculating the predicted spring-back amount Sb2 from the acquired result, the less dispersed target circumferential length L5 can be obtained.

This is because the predicted spring-back amount Sb2 can be calculated in consideration of a dispersion resulting from individual differences among the material rings 11 or the like since the spring-back amount Sb1 of each of the material rings 11 is measured through spring-back amount measurement m2. As a result, the dispersion of the target circumferential length L5 can be substantially eliminated. By thus restraining the target circumferential length L5 of each of the endless metal belts 110 from dispersing, the degree of adhesion among the endless metal belts 110 in the laminated hoops 104 can be enhanced. Consequently, it is possible to contribute toward prolonging the life of the CVT belt 100.

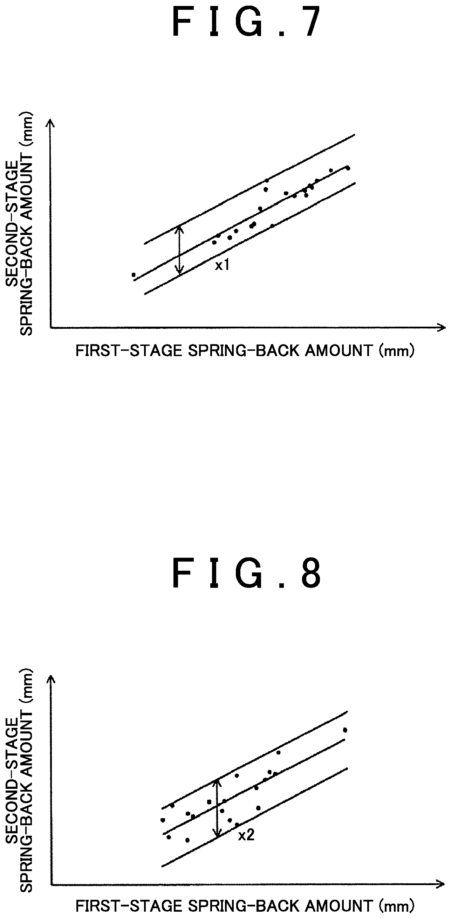

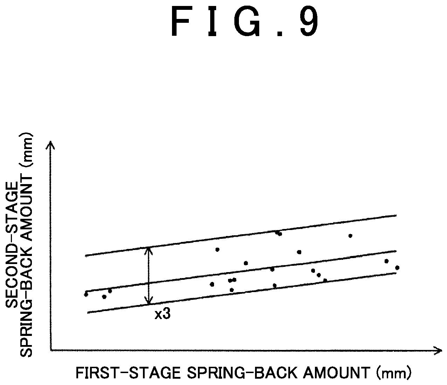

Besides, if it is assumed that the finished material ring 11 has the target circumferential length L5, the material ring 11 is stretched such that the material circumferential length L1 reaches a target of 90% of the target circumferential length L5, in the first-stage stretching step p1. That is, there is established a relationship: (a first-stage target circumferential length e1) = 0.9 x (a target circumferential length e2) as shown in FIG. 2. FIG. 7 shows a graph prepared for comparison, with the first-stage stretch ratio being 90%. FIG. 8 shows a graph prepared for comparison, with the first-stage stretch ratio being 60%. FIG. 9 shows a graph prepared for comparison, with the first-stage stretch ratio being 40%. The axis of ordinate represents the second-stage spring-back amount, and the axis of abscissa represents the first-stage spring-back amount. It is apparent from these results that a deviation width x1 shown in FIG. 7, a deviation width shown in FIG. 8, and a deviation width shown in FIG. 9 are different from one another. That is, the deviation width x1 can be narrowed by setting the first-stage stretch ratio as high as 90%. As a result, it is possible to contribute toward reducing the dispersion of the target circumferential length L5 into which each of the material rings 11 is stretched.

The invention has been described above referring to the present embodiment thereof. However, this invention should not be limited to the embodiment thereof, but can also be carried out by appropriately changing part of the configuration thereof without departing from the gist of the invention. For example, although a magnetic measuring instrument is employed to confirm the position of the driven roller 30 in the present embodiment of the invention, the invention does not need to be limited thereto as long as there are other methods enabling accurate measurement of the distance between the driving roller 20 and the driven roller 30. For example, the employment of an optical measuring instrument or the like is not excluded. Besides, the driven roller 30 includes the weight 35 to apply a certain load to the driven roller 30 in a traveling direction thereof, but the invention should not be limited to the configuration in which the weight 35 is employed. An urging method employing an elastic member or a pneumatic urging method may also be adopted as long as the driven roller 30 can thereby be urged with a certain force.

### Description of Reference Symbols

- 10: ADJUSTING DEVICE
- 11: MATERIAL RING
- 20: DRIVING ROLLER
- 30: DRIVEN ROLLER
- 35: WEIGHT
- 50: SENSOR
- 100: CVT BELT
- 102: ELEMENT
- 104: HOOP
- 110: ENDLESS METAL BELT
- 116: CONSTRICTION PORTION
- L1: CIRCUMFERENTIAL LENGTH OF MATERIAL
- L2: FIRST-STAGE STRETCH CIRCUMFERENTIAL LENGTH
- L3: FIRST-STAGE POST-STRETCH CIRCUMFERENTIAL LENGTH
- L4: SECOND-STAGE STRETCH CIRCUMFERENTIAL LENGTH
- L5: TARGET CIRCUMFERENTIAL LENGTH
- Sb1: SPRING-BACK AMOUNT
- Sb2: PREDICTED SPRING-BACK AMOUNT
- e1: FIRST-STAGE TARGET CIRCUMFERENTIAL LENGTH
- e2: TARGET CIRCUMFERENTIAL LENGTH

## Claims

1. A method of manufacturing a CVT belt in which an endless metal belt is retained from inside by a plurality of rollers and is processed into a predetermined circumferential length by widening gaps among the rollers, **characterized by** comprising:
a first-stage stretching step of stretching the endless metal belt to extend a circumferential length thereof by widening distances among the rollers;
a spring-back measuring step of measuring a spring-back amount of the endless metal belt in the first-stage stretching step;
a calculating step of calculating a predicted spring-back amount that is predicted to result in a second-stage stretching step, from the measured spring-back amount; and
the second-stage stretching step of stretching the endless metal belt and processing the endless metal belt into the predetermined circumferential length by further widening the distances among the rollers based on the predicted spring-back amount.

2. The method of manufacturing the CVT belt according to claim 1, **characterized by** further comprising
a material length measuring step of measuring a material circumferential length before stretching the endless metal belt prior to the first-stage stretching step,
wherein the endless metal belt is stretched to be processed such that a first-stage stretch length of a stretching process to which the endless metal belt is subjected becomes approximately 90 percent of a target process circumferential length that is obtained by subtracting the material circumferential length from a target circumferential length of the endless metal belt, in the first-stage stretching step.

3. The method of manufacturing the CVT belt according to claim 1 or 2, **characterized in that**
the plurality of the rollers include at least a first roller and a second roller,
the second roller has moving means moving toward and away from the first roller, and urging means for urging the second roller in a moving direction thereof, and
the spring-back amount of the endless metal belt is measured with a certain load applied to the second roller by the urging means, in the spring-back measuring step.

## Patentansprüche

1. Herstellungsverfahren für einen Riemen eines CVT-Getriebes, in dem ein endloses Metallband von Innen durch eine Vielzahl von Rollen gehalten wird und auf eine vorbestimmte Umfangslänge durch Erweitern von Zwischenräumen zwischen den Rollen bearbeitet wird, **gekennzeichnet durch**:
einen Streckschritt der ersten Stufe, wobei das endlose Metallband gestreckt wird, um durch Erweitern von Abständen zwischen den Rollen dessen Umfangslänge auszudehnen;
einen Rückfederungsmessschritt, wobei ein Rückfederungsbetrag des endlosen Metallbands in dem Streckschritt der ersten Stufe gemessen wird;
einen Berechnungsschritt, wobei aus dem gemessenen Rückfederungsbetrag ein vorausgesagter Rückfederungsbetrag berechnet wird, der vorausgesagt wird, um zu einem Streckschritt einer zweiten Stufe zu führen; und
den Streckschritt der zweiten Stufe, wobei das endlose Metallband gestreckt wird und das endlose Metallband auf die vorbestimmte Umfangslänge durch ein weiteres Erweitern der Abstände zwischen den Rollen basierend auf den vorausgesagten Rückfederungsbetrag bearbeitet wird.

2. Herstellungsverfahren für einen Riemen eines CVT-Getriebes gemäß Anspruch 1, des Weiteren **gekennzeichnet durch**
einen Werkstofflängenmessschritt, wobei vor dem Streckschritt der ersten Stufe eine Werkstoffumfangslänge vor einem Strecken des endlosen Metallbands gemessen wird,
wobei das endlose Metallband gestreckt wird, um derart bearbeitet zu werden, dass eine Strecklänge der ersten Stufe eines Streckprozesses, dem das endlose Metallband ausgesetzt ist, in dem Streckschritt der ersten Stufe annäherungsweise 90 Prozent einer Sollbearbeitungsumfangslänge wird, die durch Subtrahieren der Werkstoffumfangslänge von einer Sollumfangslänge des endlosen Metallbands erhalten wird.

3. Herstellungsverfahren für einen Riemen eines CVT-Getriebes gemäß Anspruch 1 oder 2, **dadurch gekennzeichnet, dass**
die Vielzahl der Rollen mindestens eine erste Rolle und eine zweite Rolle enthält,
die zweite Rolle eine Bewegungseinrichtung, die sich in Richtung der ersten Rolle und von dieser weg bewegt, und eine Drängeinrichtung zum Drängen der zweiten Rolle in deren Bewegungsrichtung hat, und
der Rückfederungsbetrag des endlosen Metallbands in dem Messschritt der Rückfederung mit einer bestimmten Last gemessen wird, die auf die zweite Rolle durch die Drängeinrichtung aufgebracht wird.

## Revendications

1. Procédé de fabrication de courroie de transmission à variation continue dans lequel une courroie métallique sans fin est retenue de l'intérieur par une pluralité de rouleaux et est traitée pour atteindre une longueur circonférentielle prédéterminée en élargissant les intervalles entre les rouleaux, **caractérisé en ce qu'**il comprend :
une étape d'étirement de premier stade consistant à étirer la courroie métallique sans fin afin d'étendre une longueur circonférentielle de celle-ci en élargissant les distances entre les rouleaux ;
une étape de mesure d'effet inverse consistant à mesurer une quantité d'effet inverse de la courroie métallique sans fin à l'étape d'étirement de premier stade ;
une étape de calcul consistant à calculer une quantité d'effet inverse anticipée qui est prévue en résultat d'une étape d'étirement de second stade, à partir de la quantité d'effet inverse mesurée ; et
l'étape d'étirement de second stade consistant à étirer la courroie métallique sans fin et à traiter la courroie métallique sans fin en la longueur circonférentielle prédéterminée en élargissant plus les distances entre les rouleaux sur la base de la quantité d'effet inverse anticipée.

2. Procédé de fabrication de courroie de transmission à variation continue selon la revendication 1, **caractérisé en ce qu'**il comprend en outre
une étape de mesure de la longueur du matériau consistant à mesurer une longueur circonférentielle de matériau avant d'étirer la courroie métallique sans fin avant l'étape d'étirement de premier stade,
dans lequel la courroie métallique sans fin est étirée afin d'être traitée de sorte qu'une longueur d'étirement de premier stade d'un procédé d'étirement auquel est soumise la courroie métallique sans fin devienne approximativement égale à 90 pourcent d'une longueur circonférentielle de traitement cible obtenue en soustrayant la longueur circonférentielle de matériau d'une longueur circonférentielle cible de la courroie métallique sans fin, à l'étape d'étirement de premier stade.

3. Procédé de fabrication de courroie de transmission à variation continue selon la revendication 1 ou 2, **caractérisé en ce que**
la pluralité des rouleaux comprend au moins un premier rouleau et un second rouleau,
le second rouleau possède des moyens de déplacement se déplaçant vers et en éloignement du premier rouleau, et des moyens de pression pour presser le second rouleau suivant une direction de déplacement de celui-ci, et
la quantité d'effet inverse de la courroie métallique sans fin est mesurée avec une certaine charge appliquée au second rouleau par les moyens de pression, à l'étape de mesure d'effet inverse.
